(19) Europäisches Patentamt
European Patent Office
Office européen des brevets

(11) **EP 4 468 033 A1**

(12) **EUROPÄISCHE PATENTANMELDUNG**

(43) Veröffentlichungstag:
27.11.2024 Patentblatt 2024/48

(21) Anmeldenummer: **24175645.1**

(22) Anmeldetag: **14.05.2024**

(51) Internationale Patentklassifikation (IPC):
**G01S 13/90** (2006.01)    **G01S 13/02** (2006.01)

(52) Gemeinsame Patentklassifikation (CPC):
**G01S 13/0209; G01S 13/9023**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **22.05.2023 DE 102023113349**

(71) Anmelder: **Deutsches Zentrum für Luft- und Raumfahrt e.V.**
**53227 Bonn (DE)**

(72) Erfinder:
• **Kim, Sunim**
**Fürstenfeldbruck (DE)**
• **Krieger, Gerhard**
**Gauting (DE)**
• **Villano, Michelangelo**
**Gilching (DE)**
• **Mustieles Perez, Victor**
**Germering (DE)**

(74) Vertreter: **Fink Numrich**
**Patentanwälte PartmbB**
**Paul-Gerhardt-Allee 24**
**81245 München (DE)**

(54) **VERFAHREN ZUM BESTIMMEN EINER VERTIKALEN STRUKTUR EINES HALBTRANSPARENTEN MEDIUMS AUS SAR-DATEN EINES SAR-SYSTEMS**

(57) Es wird ein Verfahren zum Bestimmen einer vertikalen Struktur eines halbtransparenten Mediums aus SAR-Daten eines SAR-Systems beschrieben. Das SAR-System umfasst entweder ein oder mehrere Breitband-Radare mit einer im Vergleich zur Trägerfrequenz hohen Bandbreite von mehr als 25% oder alternativ ein oder mehrere Multiband-Radare mit verschiedenen Frequenzbändern, bei denen die obere Frequenz des Multiband-Radars mindestens doppelt so groß wie die untere Frequenz des Multiband-Radars ist. Durch das SAR-System werden SAR-Daten von zumindest zwei SAR-Aufnahmen eines Gebiets, dessen vertikale Struktur bestimmt werden soll, empfangen, wobei die zumindest zwei SAR-Aufnahmen aus unterschiedlichen Beobachtungswinkeln mit bekannten Basislinien zueinander durchgeführt werden. Für jede der zumindest zwei SAR-Aufnahmen wird ein jeweiliges Breitband-SAR-Bild (10B, 20B) erzeugt. Aus einem oder mehreren unterschiedlichen Paaren an Breitband-SAR-Bildern (10B, 20B) wird über den gesamten Bereich der Breitbandfrequenz jeweils eine Vielzahl von Schmalband-Interferogrammen mit unterschiedlichen Mittenfrequenzen bestimmt, wobei Schmalband-Interferogramme entsprechender Mittenfrequenzen des oder jedes der mehreren unterschiedlichen Paare an Breitband-SAR-Bildern einen Satz an Schmalband-Interferogrammen bilden. Aus jedem Satz an Schmalband-Interferogrammen wird für unterschiedliche Bildbereiche jeweils ein entsprechendes Profil der frequenzabhängigen Kohärenz bestimmt. Dann wird eine Inversion für jedes Kohärenzprofil bestimmt. Aus der Inversion werden die vertikale Struktur charakterisierende Parameter bestimmt.

Fig. 1

EP 4 468 033 A1

**Beschreibung**

Die Erfindung betrifft ein Verfahren und eine Vorrichtung zum Bestimmen einer vertikalen Struktur eines halbtransparenten Mediums aus SAR-Daten eines SAR-Systems.

SAR (Synthetic Aperture Radar)-Systeme ermöglichen die Fernerkundung der Erdoberfläche durch die Erfassung von an der Erdoberfläche reflektierten Radarpulsen, welche von dem SAR-System ausgesendet werden. Das SAR-System ist ein aktives, kohärentes und hochauflösendes Abbildungsradar, das auf einer sich bewegenden Plattform in einer zur Seite orientierten Geometrie arbeitet. Ein SAR-Bild wird aus den aufgenommenen SAR-Daten durch eine Verarbeitung erzeugt, die als SAR-Fokussierung (SAR focusing) bekannt ist. Im Folgenden bezieht sich der Begriff der Aufnahme eines SAR-Bildes auf die Aufnahme von SAR-Daten und deren Verarbeitung zur Erzeugung eines SAR-Bildes. Die Arbeitsweise von SAR-Systemen ist prinzipiell bekannt. Im Folgenden wird der Begriff eines SAR-Systems in allgemeiner Form verwendet und umfasst auch ein SAR-System, das mit mehreren Radaren auf einer oder mehreren Plattformen ausgestattet ist und somit mehrere SAR-Aufnahmen aus unterschiedlichen Flugbahnen gleichzeitig ermöglichen kann.

Die SAR-Interferometrie (InSAR) dient unter anderem zur Bestimmung einer topographischen Höhe einer Szene aus zwei SAR-Bildern desselben Gebiets von Positionen, die in Querrichtung, d.h. orthogonal zur Flugrichtung des SAR-Systems, voneinander getrennt sind. Der räumliche Abstand zwischen den Aufnahmepositionen wird als Basislinie bezeichnet. Die Projektion der Basislinie in die Richtung orthogonal zur Schrägentfernung des vom SAR-Radar erfassten Gebiets wird als orthogonale Basislinie definiert. In der folgenden Beschreibung bezieht sich der Begriff der Basislinie, sofern dies nicht anders angegeben ist, immer auf die orthogonale Basislinie.

Soll die topographische Höhe in einem Gebiet, das halbtransparente Medien mit Mehrfachstreuung aufweist, bestimmt werden, so besteht das Problem, dass es innerhalb der Volumenstruktur zu einer volumetrischen Dekorrelation kommt, welche sich negativ auf die InSAR-Phase auswirkt und die Genauigkeit der Höhenmessung beeinträchtigt. Halbtransparente Medien mit Mehrfachstreuung sind beispielsweise Waldgebiete oder Eisflächen. Bei der Erfassung solcher Gebiete sind daher zusätzliche Messungen und Verarbeitungen erforderlich, um die Volumenstruktur richtig zu charakterisieren. Zu bekannten Methoden gehören die polarimetrische SAR-Interferometrie (PolInSAR) und die SAR-Tomographie.

Zur Erfassung von SAR-Daten für PolInSAR-Methoden werden SAR-Systeme verwendet, die in der Lage sind, unterschiedlich polarisierte Signale auszusenden und deren reflektierte Echos mit unterschiedlichen Polarisationen zu empfangen. Bei der Verarbeitung der Empfangssignale wird die Variation der interferometrischen Kohärenz über verschiedene Polarisationen aufgrund unterschiedlicher Streuungsmechanismen zur Charakterisierung der volumetrischen Eigenschaften und der unter der Oberfläche liegenden Topographie genutzt. Zur Durchführung dieses Verfahrens werden SAR-Daten mit Hilfe von sogenannten polarimetrischen SAR-Systemen erfasst, die auf luftgestützten Plattformen oder raumgestützten Plattformen (Satelliten) montiert sind.

Für die SAR-Tomographie werden zumindest drei, in der Regel fünf bis zehn, SAR-Bilder benötigt, die von verschiedenen Positionen in der Querrichtung des SAR-Systems aufgenommen wurden. Unter Verwendung sämtlicher SAR-Bilder wird ein Array in der Querrichtung zur Flugrichtung (so genannte Cross-Track-Richtung) gebildet, welches es ermöglicht, ein dreidimensionales Radarbild des erfassten Gebiets zu erstellen. Aus der Vielzahl an SAR-Bildern können mehrere Interferogramme derselben Szene mit unterschiedlichen Basislinien erstellt werden. Durch die dem Fachmann bekannte Inversion der Interferogramme können vertikale Streuinformationen gewonnen werden. Solche Daten können mit einer luftgestützten Plattform mit mehreren kontrollierten Flugbahnen über demselben Gebiet erfasst werden. Die Daten können auch mit an Satelliten angebrachten SAR-Systemen erfasst werden, wobei das zu untersuchende Gebiet in der Regel mehrmals überflogen wird.

Als Maß für die Korrelation zweier Bilder, die für die Interferometrie verwendet werden, ebenso als Größe, die im Inversionsprozess verwendet wird, wird die so genannte InSAR-Kohärenz verwendet. Die InSAR-Kohärenz kann aufgrund der volumetrischen Dekorrelation anhand des vertikalen Streuprofils des Gebiets, das untersucht werden soll, modelliert werden.

Die Bestimmung der vertikalen Struktur eines Gebiets mit halbtransparentem Medium ist bislang nur mit großem Aufwand und hohen Kosten durchzuführen. Die Verwendung von PolInSAR-Methoden erfordern ein spezielles Hardware-Design des SAR-Systems, das in der Lage ist, mehrere Polarisationen zu senden und zu empfangen, wobei die Genauigkeit des Ergebnisses der Inversion begrenzt ist.

Die SAR-Tomographie erfordert eine große Anzahl von SAR-Bildern, üblicherweise zwischen fünf und zehn. Die gleichzeitige Erfassung aller SAR-Bilder erfordert daher eine Flotte von Flugzeugen mit luftgestützten Sensoren oder eine entsprechende Anordnung von Satelliten, wobei beides komplex und kostspielig ist. SAR-Bilder, die im so genannten Repeat-Pass-Verfahren aufgenommen werden, also durch mehrfaches Überfliegen des Gebietes mit der zu bestimmenden vertikalen Struktur, führen zu einer zeitlichen Dekorrelation, die im Fall der Nutzung eines satellitengestützten SAR-Systems aufgrund der begrenzten Wiederholraten gravierend sein kann. Dies schränkt die Genauigkeit der Inversionsergebnisse ein.

Eine Abweichung von den oben beschriebenen Vorgehensweisen ist aufgrund regulatorischer Vorschriften hinsichtlich der von den SAR-Systemen zu verwendeten Sendeleistung, den Sendefrequenzen und deren Bandbreite und der darauf abgestimmten Algorithmen nicht ohne weiteres möglich. Die maximale Bandbreite, die von luft- und weltraumgestützten Plattformen übertragen werden kann, ist reguliert. Im P- und im L-Band, die aufgrund der großen Wellenlängen eine hohe Durchdringung aufweisen, ist die maximale Sendebandbreite aus dem Weltraum auf 6 MHz bzw. 85 MHz begrenzt. Aufgrund dessen können die über die Wellenlängen variierenden Informationen nicht zur Inversion der vertikalen Streuungsinformation genutzt werden.

Es ist Aufgabe der vorliegenden Erfindung, ein Verfahren und eine Vorrichtung anzugeben, mit denen die Bestimmung einer vertikalen Struktur eines halbtransparenten Mediums funktionell vereinfacht ist.

Diese Aufgaben werden gelöst durch ein Verfahren gemäß den Merkmalen des Anspruches 1, ein Computerprogrammprodukt gemäß den Merkmalen des Anspruches 15, und eine Vorrichtung gemäß den Merkmalen des Anspruches 16. Vorteilhafte Ausgestaltungen ergeben sich aus den abhängigen Ansprüchen.

Es wird ein Verfahren zum Bestimmen einer vertikalen Struktur eines halbtransparenten Mediums aus SAR-Daten eines SAR-Systems vorgeschlagen. Das halbtransparente Medium kann die Eigenschaft einer Mehrfachstreuung aufweisen, wie dies beispielsweise bei Waldgebieten oder Eisflächen auftritt. Das zur Durchführung des Verfahrens genutzte SAR-System umfasst entweder ein oder mehrere Breitband-Radare mit einer im Vergleich zur Trägerfrequenz hohen Bandbreite von mehr als 25% oder alternativ ein oder mehrere Multiband-Radare mit verschiedenen Frequenzbändern umfasst, bei denen eine obere (Grenz-)Frequenz des Multiband-Radars mindestens doppelt so groß wie eine untere (Grenz-)Frequenz des Multiband-Radars ist. Als Träger der Radare des SAR-Systems kommen Flugzeuge, Satelliten oder auch Drohnen (Unmanned Aerial Vehicles, UAV) in Betracht. Letztere ermöglichen die Erkundung des betrachteten Gebiets aus einer im Vergleich zu Flugzeugen oder Satelliten wesentlich geringeren Höhe. Die Möglichkeit, UAVs vertikal starten zu lassen, ohne hierfür Landebahnen zu benötigen, ermöglicht ebenfalls die Erkundung in komplexen Umgebungen. Die Erfassung von Daten über lokalen Gebieten kann darüber hinaus mit sehr hohen Wiederholungsraten zu wettbewerbsfähigen Kosten erfolgen. Aufgrund ihrer geringen Kosten und ihrer unbemannten Eigenschaften können auch problemlos mehrere UAVs gleichzeitig betrieben werden.

Bei dem erfindungsgemäßen Verfahren werden die folgenden Schritte durchgeführt:
In einem Schritt a) werden durch das SAR-System SAR-Daten von zumindest zwei SAR-Aufnahmen eines Gebiets, dessen vertikale Struktur bestimmt werden soll, empfangen. Die zumindest zwei SAR-Aufnahmen werden hierbei aus unterschiedlichen Beobachtungswinkeln mit bekannten Basislinien zueinander durchgeführt. Die Bestimmung der SAR-Daten kann dabei optional durch eine oder mehrere Plattformen im bekannten Repeat-Pass-Verfahren erfolgen, also durch Erfassung der SAR-Daten über dem Gebiet mit zeitlich aufeinander folgenden SAR-Aufnahmen. Alternativ kann die Bestimmung der SAR-Daten gleichzeitig durch zwei oder mehr Plattformen im bekannten Single-Pass-Verfahren erfolgen, wobei in diesem Fall mehrere Radare an einem oder mehreren in einer Formation fliegenden Plattformen angeordnet sind (bi-statische oder multi-statische Konfiguration). In diesem Fall reicht es aus, dass eines der Radare Radarpulse aussenden kann und alle Radare die reflektierten Radarpulse empfangen können.

In einem Schritt b) wird für jede der zumindest zwei SAR-Aufnahmen ein jeweiliges Breitband-SAR-Bild erzeugt. Unter dem Begriff eines "Breitband-SAR-Bilds" ist ein SAR-Bild zu verstehen, das die von dem Radar genutzte große Sendebandbreite ausnutzt. Diese kann, wie oben beschrieben, bei einem Breitband-Radar eine im Vergleich zur Trägerfrequenz genutzte Bandbreite von mehr als 25% umfassen. Ein Breitband-SAR-Bild, das mit einem Multiband-Radar erzeugt wurde, kann in verschiedenen Frequenzbändern liegen, d.h. Unterbrechungen zwischen den Frequenzbändern und/oder innerhalb eines Frequenzbands aufweisen.

In einem Schritt c) werden aus einem oder mehreren unterschiedlichen Paaren an Breitband-SAR-Bildern, im Folgenden auch als InSAR-Paare bezeichnet, über den gesamten Bereich der Breitbandfrequenz jeweils eine Vielzahl von Schmalband-Interferogrammen mit unterschiedlichen Mittenfrequenzen bestimmt. Schmalband-Interferogramme entsprechender Mittenfrequenzen des oder jedes der mehreren unterschiedlichen Paare an Breitband-SAR-Bildern bilden hierbei einen Satz an Schmalband-Interferogrammen. Die Schmalband-Interferogramme können beispielsweise durch Filtern eines jeden Paares von Breitband-SAR-Bildern mittels einer Fensterfunktion mit einer gegebenen Mittenfrequenz und einer vorgegebenen Breite und Verarbeitung der so erhaltenen Schmalband-SAR-Bilder in bekannter Weise gewonnen werden.

In einem Schritt d) wird dann aus jedem Satz an Schmalband-Interferogrammen für unterschiedliche Bildbereiche jeweils ein entsprechendes Profil der frequenzabhängigen Kohärenz bestimmt. Dieses Profil wird als Kohärenzprofil bezeichnet. Die Vielzahl an frequenzabhängigen Kohärenzprofilen resultiert aus einer entsprechenden Vielzahl an unterschiedlichen Bildbereichen in einem zwei-dimensionalen, räumlichen Koordinatensystem des betrachteten Gebiets (ohne Betrachtung der Höhenkoordinate).

In Schritt e) wird eine an sich bekannte Inversion für jedes Kohärenzprofil (d.h. für jeden Bildbereich des zwei-dimensionalen, räumlichen Koordinatensystems des betrachteten Gebiets) bestimmt. Schließlich können in Schritt f) aus der Inversion die vertikale Struktur charakterisierende Parameter (d.h. für jeden Bildbereich des zwei-dimensionalen, räumlichen Koordinatensystems des betrachteten Gebiets) bestimmt werden.

Das vorliegende Verfahren ermöglicht eine einfache und kostengünstige Bestimmung der vertikalen Struktur eines halbtransparenten Mediums, das Mehrfachstreuung aufweisen kann. Ermöglicht wird die Bestimmung der vertikalen Struktur dadurch, dass ein SAR-System mit einem oder mehreren Radaren verwendet wird, die eine weite normierte Bandbreite aufweisen, d.h. in der Lage sind, Signale mit einer Bandbreite in der Größenordnung der Radarträgerfrequenz zu senden und zu empfangen. Durch die Erzeugung von Breitband-SAR-Bildern für jede SAR-Aufnahme und eine nachgeschaltete Verarbeitung, in der aus einem oder mehreren unterschiedlichen Paaren an Breitband-SAR-Bildern über den gesamten Bereich der Breitbandfrequenz jeweils eine Vielzahl von Schmalband-Interferogrammen mit unterschiedlichen Mittenfrequenzen bestimmt wird, kann durch eine Inversion die dreidimensionalen Volumenstruktur bestimmt werden.

Von Vorteil ist, dass für Volumenstrukturen, die ein halbtransparentes Medium aufweisen und dadurch das von dem SAR-Radar ausgesendete elektromagnetische Signal dämpfen, zwei SAR-Aufnahmen ausreichen, wenn die Extinktion über die Frequenzen der betrachteten Radare konstant ist. Für Volumenstrukturen, die durch frequenzabhängige Extinktion gekennzeichnet sind, werden mindestens drei SAR-Aufnahmen des Gebiets mit halbtransparentem Medium benötigt.

Die SAR-Aufnahmen können nicht nur mit Flugzeugen und Satelliten, sondern auch mit UAVs erfolgen, was den Aufwand zur Bestimmung der vertikalen Struktur des Gebiets mit halbtransparentem Medium vereinfacht. Bei UAVs kann aufgrund der geringen Flughöhe das erfindungsgemäß eingesetzte Radar mit einer sehr geringen Leistung im Milliwattbereich betrieben werden.

Das Verfahren beruht auf der Erkenntnis, dass die InSAR-Kohärenz frequenzabhängig ist. Bestehende SAR-Systeme können diese Beziehung aufgrund der Schmalband-Charakteristik ihrer Radare nicht ausnutzen. Im Gegensatz dazu ermöglicht die vorliegende Erfindung die Abschätzung eines Kohärenzprofils in Abhängigkeit der Frequenz, da sie die Verwendung von Radaren mit großer Bandbreite vorsieht. Das Frequenzprofil der Kohärenz kann hierbei zur Charakterisierung des vertikalen Streuprofils verwendet werden.

In einer zweckmäßigen Ausgestaltung ist vorgesehen, dass das Kohärenzprofil pixelweise bestimmt wird. Dies ermöglicht eine genaue Bestimmung der vertikalen Struktur eines halbtransparenten Mediums über einen betrachteten Volumenbereich.

Eine weitere zweckmäßige Ausgestaltung sieht vor, dass die Mittenfrequenzen zweier benachbarter oder aufeinanderfolgender Schmalband-Interferogramme so gewählt sind, dass die zwei Schmalband-Interferogramme teilweise überlappen. Insbesondere beträgt der Überlapp zwischen den zwei benachbarten oder aufeinander folgenden Schmalband-Interferogrammen 50% oder mehr.

Um eine hohe Genauigkeit beim Bestimmen der vertikalen Struktur des halbtransparenten Mediums zu erzielen, ist es weiterhin zweckmäßig, wenn die Schmalband-Interferogramme aus Schmalbandbildern mit leicht unterschiedlicher Bandbreite erzeugt werden. Ebenso ist es zweckmäßig, wenn sich die Mittenfrequenzen der beiden Schmalbandbilder, die zur Bildung eines jeweiligen Schmalbandinterferogramms verwendet werden, insbesondere geringfügig, unterscheiden.

Für den Fall, dass die zu untersuchende Volumenstruktur mit dem halbtransparenten Medium durch eine frequenzabhängige Extinktion gekennzeichnet ist, ist es zweckmäßig, wenn in Schritt a) durch das SAR-System SAR-Daten von drei (oder mehr) SAR-Aufnahmen des Gebiets empfangen werden, wobei die drei (oder mehr) SAR-Aufnahmen mit zwei (oder mehr) bekannten Basislinien zueinander durchgeführt werden.

In dieser Konstellation ist zudem vorgesehen, dass in Schritt b) für jeden der drei (oder mehr) SAR-Aufnahmen ein jeweiliges Breitband-SAR-Bild bestimmt wird und in Schritt c) aus den drei daraus bildbaren, unterschiedlichen Paaren an Breitband-SAR-Bildern über den gesamten Bereich der Breitbandfrequenz jeweils eine Vielzahl von Schmalband-Interferogrammen mit unterschiedlichen Mittenfrequenzen bestimmt wird, wobei Schmalbandinterferogramme entsprechender Mittenfrequenzen jedes der drei Paare an Breitband-SAR-Bildern einen Satz an Schmalband-Interferogrammen bilden.

Dabei ist dann in Schritt d) vorgesehen, dass aus jedem der drei Sätze an Schmalband-Interferogrammen frequenzabhängige Kohärenzprofile bestimmt werden.

Gemäß einer weiteren zweckmäßigen Ausgestaltung werden in Schritt f) die die vertikale Struktur charakterisierenden Parameter wahlweise durch ein Gauß-Newton-Verfahren oder die Bestimmung des mittleren quadratischen Fehlers (Mean Squared Error, MSE) bestimmt. Die beiden Verfahren sind im Zusammenhang mit der Bestimmung der Inversion dem Fachmann prinzipiell bekannt.

Es ist weiterhin zweckmäßig, wenn als die die vertikale Struktur charakterisierenden Parameter zumindest eine Höhe der vertikalen Struktur und ein Extinktionskoeffizient oder die Extinktionskoeffizienten charakterisierende Parameter bestimmt werden. Der Extinktionskoeffizient gibt dabei die Dämpfung des elektromagnetischen Signals durch das Medium der vertikalen Struktur an. Insbesondere kann hierbei vorgesehen sein, dass, abhängig vom Ergebnis der Schätzung eines den Extinktionskoeffizienten charakterisierenden Parameters, der Extinktionskoeffizient als frequenzabhängig oder konstant angenommen wird.

Die Erfindung schafft ferner ein Computerprogrammprodukt, umfassend Befehle, die bei der Ausführung des Programms durch einen Computer diesen veranlassen, das Verfahren gemäß einer mehrerer Ausgestaltungsvarianten auszuführen.

Ferner schlägt die Erfindung eine Vorrichtung zum Bestimmen einer vertikalen Struktur eines halbtransparenten Mediums aus SAR-Daten eines SAR-Systems vor, das entweder ein oder mehrere Breitband-Radare mit einer im Vergleich zur Trägerfrequenz hohen Bandbreite von mehr als 25% oder alternativ ein oder mehrere Multiband-Radare mit verschiedenen Frequenzbändern, bei denen die obere Frequenz des Multiband-Radars mindestens doppelt so groß wie die untere Frequenz des Multiband-Radars ist, umfasst. Die Vorrichtung weist einen Prozessor auf, der dazu eingereicht ist, das Verfahren gemäß einem oder mehrerer Ausführungsvarianten der Erfindung durchzuführen.

Die Erfindung wird im Folgenden anhand von Ausführungsbeispielen in der Zeichnung näher erläutert. Es zeigen:

Fig. 1          eine schematische Darstellung, die den prinzipiellen Ablauf des erfindungsgemäßen Verfahrens illustriert;

Fig.2           ein Blockdiagramm, das die erfindungsgemäße Multiband-InSAR-Verarbeitung von SAR-Daten illustriert;

Fig. 3          ein Blockdiagramm, das die Schritte eines Inversionsverfahrens zur Bestimmung charakterisierender Parameter für den Fall der Erfassung von SAR-Daten mit einer einzigen Basislinie zeigt;

Fig. 4          ein Blockdiagramm, das die Inversion unter Verwendung eines Gauß-Newton-Verfahrens in iterativer Weise für den Fall zeigt, dass SAR-Daten mit einer einzigen Basislinie erfasst wurden;

Fig. 5          ein Blockdiagramm, das die Schritte eines Inversionsverfahrens zur Bestimmung charakterisierender Parameter für den Fall der Erfassung von SAR-Daten mit zwei Basislinien zeigt;

Fig. 6          ein Blockdiagramm, das die Inversion unter Verwendung des Gauß-Newton-Verfahrens in iterativer Weise für den Fall zeigt, dass SAR-Daten mit zwei Basislinien erfasst wurden;

Fig. 7          eine schematische Darstellung, die die Geometrie einer Simulation mit einem halbtransparentem Medium, das mit Punktzielen modelliert ist, illustriert;

Fig. 8          ein Kohärenz-Frequenz-Diagramm, das aus den simulierten Daten der Fig. 7 erzeugt ist;

Fig. 9a und 9b  ein SAR-Bild der simulierten Daten und eine erstellte Höhenkarte; und

Fig. 10a und 10b  ein simuliertes Gebiet mit einer mit der Bodenentfernung variierenden Volumenhöhe und einer erstellten Höhenkarte.

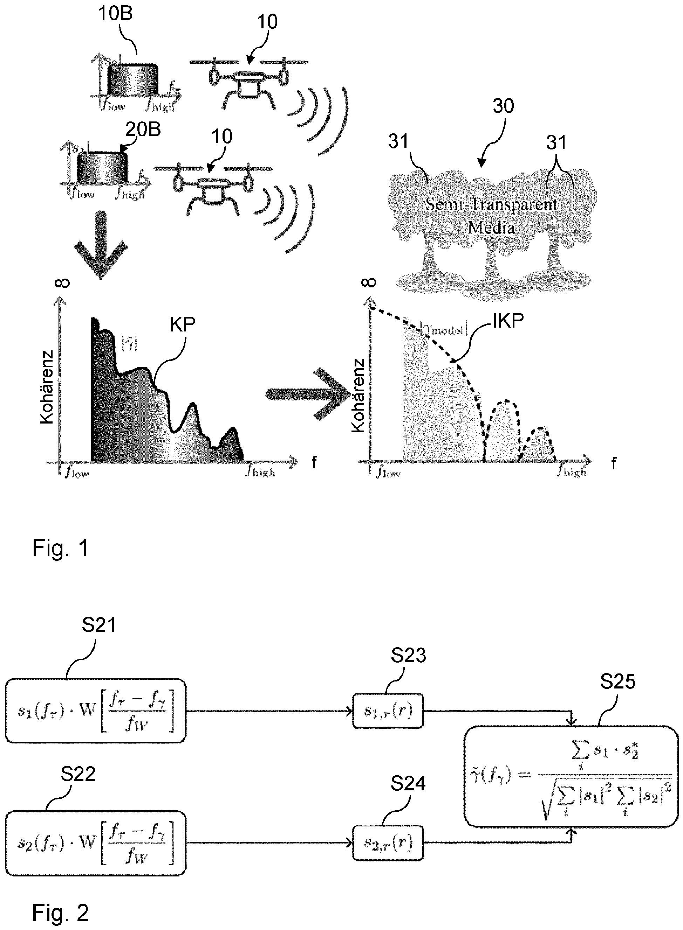

Fig. 1 zeigt eine schematische Darstellung der wesentlichen Schritte des erfindungsgemäßen Verfahrens zum Bestimmen einer vertikalen Struktur eines halbtransparenten Mediums 30. Das halbtransparente Medium 30 besteht in der vorliegenden schematischen Darstellung beispielhaft aus einer Mehrzahl an Bäumen 31, welche jeweils eine gleiche oder unterschiedliche Höhe aufweisen. Diese soll für das untersuchte Gebiet mit Hilfe des erfindungsgemäßen Verfahrens bestimmt werden.

Die Bestimmung erfolgt aus SAR-Daten eines SAR-Systems, das im vorliegenden Fall aus zwei Plattformen 10, 20 besteht, die die SAR-Daten gleichzeitig erfassen ("singlepass mode"). Beide Plattformen sind jeweils mit einem nicht dargestellten Radar ausgestattet, wobei es ausreicht, dass eines der Radare Radarpulse aussenden kann und beide Radare die reflektierten Radarpulsen empfangen können.

Grundsätzlich können die beiden Plattformen 10, 20 auch als eine oder mehrere Plattformen betrachtet werden, die die SAR-Daten von den beiden in zeitlich aufeinanderfolgenden SAR-Bildern dargestellten Positionen erfassen ("repeat-pass mode"). In diesem Fall sollte die Plattformen mit Radaren ausgestattet sein, die sowohl Radarpulse aussenden als auch die reflektierten Radarpulse empfangen können.

Die Radare können als ein Breitband-Radar mit einer im Vergleich zur Trägerfrequenz hohen Bandbreite von mehr als 25% ausgebildet sein. Die Radare können alternativ als ein oder mehrere Multiband-Radare mit verschiedenen Frequenzbändern ausgebildet sein, bei dem eine obere (Grenz-)Frequenz des Multiband-Radars mindestens doppelt so groß wie eine untere (Grenz-)Frequenz des Multiband-Radars ist.

In der nachfolgenden Beschreibung wird von zwei Plattformen 10, 20 ausgegangen. Die Plattformen 10, 20 überfliegen das zu untersuchende Gebiet (auch als Szene bezeichnet) mit der zu bestimmenden vertikalen Struktur 30 in der vorliegenden beispielhaften Darstellung zum gleichen Zeitpunkt.

Die Plattformen 10, 20 sind lediglich aus zeichnerischen Gründen als so genannte unbemannte Luftfahrzeug (Unmanned Aerial Vehicle, UAV) dargestellt. Die Plattformen 10, 20 könnten jedoch auch Flugzeuge oder Satelliten sein.

Jede der Plattformen 10, 20 stellt von den SAR-Aufnahmen des Gebiets 30, dessen vertikale Struktur bestimmt werden soll, ein jeweiliges Breitband-SAR-Bild 10B, 20B bereit. Die Breitband-SAR-Bilder sind mit einer bekannten Basislinie der Plattformen 10, 20 zueinander aufgenommen worden. Die Breitband-SAR-Bilder 10B, 20B sind in Fig. 1 schematisch durch Fourier-transformierte SAR-Daten der jeweiligen Radarsignale in einem Frequenzbereich zwischen $f_{low}$ und $f_{high}$ symbolisiert, wobei die Fourier-Transformation in Bezug auf die Entfernungsvariable erfolgt.

Wie aus der weiteren Beschreibung ersichtlich werden wird, werden aus den zwei Breitband-SAR-Bildern 10B, 20B Profile der frequenzabhängigen Kohärenz über den Bereich der Breitbandfrequenz, d.h. zwischen $f_{low}$ und $f_{high}$, bestimmt. Die Profile werden als Kohärenzprofile bezeichnet. Aus jedem frequenzabhängigen Kohärenzprofil KP wird dann in bekannter Weise eine Inversion IKP bestimmt. Nach dem Vorliegen der Inversion können die vertikale Struktur 30 charakterisierende Parameter des betrachteten Volumenbereichs bestimmt werden.

Um das Kohärenzprofil KP zu erhalten, wird das in Fig. 2 dargestellte Verfahren durchgeführt. Der erste Schritt S21, S22 besteht in der Durchführung einer Multiband-InSAR-Verarbeitung der zwei Breitband-SAR-Bilder 10B, 20B. Die Breitband-SAR-Bilder 10B, 20B liegen jeweils als Fourier-transformierte SAR-Daten 10B, 20B vor und werden als $s_1(f_r)$ und $s_2(f_r)$ bezeichnet, wobei die Fourier-Transformation in Bezug auf die Entfernungsvariable erfolgt und $f_r$ die Entfernungsfrequenz darstellt. Die SAR-Daten 10B, 20B werden in Schritt S21, S22 mit Hilfe einer Fensterfunktion W gefiltert, die eine Mittenfrequenz $f_\gamma$ und eine Breite $f_W$ aufweist. Hieraus ergeben sich verschiedene, insbesondere sich teilweise überlappende "Schmalband"-SAR-Bilder. Die Überlappung der Schmalband-SAR-Bilder beträgt vorzugsweise 50% oder mehr. Das Vorgehen wird über die Mittenfrequenz $f_\gamma$ wiederholt durchgeführt, welche über die Frequenz des Empfangenen SAR-Signals 10B, 20B, welches eine hohe Bandbreite ($f_{high}$ - $f_{low}$) aufweist variiert. Die im Schritt S21, S22 jeweils einander zugeordneten Schmalband-SAR-Bilder werden dem Prozess einer Ko-Registrierung unterzogen, wodurch in Schritt S23, S24 vorverarbeitete SAR-Daten $s_{1,r}(r)$ und $s_{2,r}(r)$ erhalten werden. Die SAR-Daten jeder SAR-Aufnahme können entweder vor der Anwendung der Schmalbandfilter oder nach der Anwendung für jeden Schmalbanddatensatz, in jedem Fall aber vor der Ko-Registrierung, zu einem SAR-Bild fokussiert werden. Aus den aus diesen gebildeten Schmalband-Interferogrammen wird in Schritt S25 die Kohärenz $\tilde{\gamma}(f_\gamma)$ für die Mittenfrequenz $f_\gamma$ und jedes Pixel geschätzt. Die Schätzung der Kohärenz eines bestimmten Pixels erfordert mehrere Pixel, die in den Summen der Formel in Schritt 25 als $i$ angegeben sind, wobei neben dem betrachteten Pixel auch benachbarte Pixel verwendet werden. Durch die Variation der Mittenfrequenz über die große Bandbreite wird das Kohärenzprofil KP, über die beleuchtete Szene bzw. das erfasste Gebiet für jedes Pixel geschätzt.

Die dreidimensionale Abbildung in vertikale Streuprofile (IKP in Fig. 1) wird durch pixelweise Inversion des Kohärenzprofils KP erreicht. Üblicherweise wird das vertikale Streuprofil $g_v$ mit einem Extinktionskoeffizienten $\sigma$, der die Extinktion des elektromagnetischen Signals durch das Medium der vertikalen Struktur (des Volumens) berücksichtigt, modelliert:

$$g_v(z) = \begin{cases} exp\left[\frac{\ln(10)}{10}\frac{2\sigma z}{cos\theta}\right], & 0 \leq z < h_v \\ 0, & andernfalls \end{cases} \qquad (1)$$

worin z die vertikale Koordinate vom Boden, $\theta$ den Einfallswinkel der SAR-Aufnahmegeometrie und $h_v$ die Höhe des Mediums bezeichnen.

Die Kohärenz kann als Integral über die vertikale Koordinate ausgedrückt werden als

$$\gamma(f) = e^{j\phi_0(z_0)} \frac{\int_0^{h_v} exp\left[j\frac{4\pi B}{cR_s \sin\theta}fz\right]g_v(z)\,dz}{\int_0^{h_v} g_v(z)\,dz} \qquad (2)$$

wobei B die senkrechte Basislinie eines InSAR-Paares, $\emptyset_0$ die topografische Phase in Bezug auf die Bodenhöhe, c die Lichtgeschwindigkeit und $R_S$ die Schrägentfernung ist. Daher hängt der absolute Wert des Modells von den beiden Parametern $\sigma$ und $h_v$ des vertikalen Profils ab. Diese beiden Parameter $\sigma$ und $h_v$ können geschätzt werden, indem z.B. die Werte mit dem geringsten mittleren quadratischen Fehler ermittelt werden.

Im Falle einer frequenzabhängigen Extinktion werden für die Inversion SAR-Daten von mindestens drei SAR-Aufnahmen benötigt. Diese führen zu mehreren Frequenzprofilen mit unterschiedlichen (d.h. zumindest zwei) Basislinien. Somit wird eine frequenzabhängige Kohärenz über die beiden orthogonalen Koordinaten einer abgebildeten Szene für mindestens zwei verschiedene Basislinien erhalten.

Um der großen Bandbreite und der Veränderung des Streuprofils in Abhängigkeit von der Frequenz Rechnung zu tragen, wird der Extinktionskoeffizient $\sigma$ - einer der Parameter des vertikalen Profils - als eine Funktion der Frequenz $f$ modelliert:

$$2\sigma(f) = \frac{\alpha}{30}\left(\frac{f}{1\,MHz}\right)^{\beta}\left[\frac{dB}{m}\right] \quad (3)$$

wobei $\alpha$, $\beta$ Koeffizienten sind, die die Dämpfung des jeweiligen Mediums der zu untersuchenden vertikalen Struktur charakterisieren.

Das vertikale Streuprofil der vertikalen Struktur kann damit mit den drei Parametern $\alpha$, $\beta$ und $h_v$ modelliert werden gemäß:

$$g_v(z,f)\begin{cases} \exp\left[\dfrac{\ln 10 \, \dfrac{\left(\frac{\alpha}{30}\right)\left(\frac{f}{1\,MHz}\right)^{\beta}}{10}}{\cos\theta}\right] & 0 \leq z < h_v \\ 0 & andernfalls \end{cases}$$

$$(4)$$

Die Kohärenz $\gamma$ kann dann als Integral über die vertikale Koordinate ausgedrückt werden als

$$\gamma(f,l) = e^{j\phi_0(z_0)} \frac{\int_0^{h_v} \exp\left[j\frac{4\pi B_l}{cR_s \sin\theta}fz\right]g_v(z,f)\,dz}{\int_0^{h_v} g_v(z,f)\,dz}$$

$$(5)$$

wobei $B_l$ die orthogonale Basislinie eines mit $l$ indizierten InSAR-Paares ist. Daher hängt der absolute Wert des Modells von den drei Parametern des vertikalen Profils $\alpha$, $\beta$ und $h_v$ ab. Diese Parameter werden geschätzt, indem z.B. der Satz von Werten mit dem geringsten quadratischen Fehler gefunden wird.

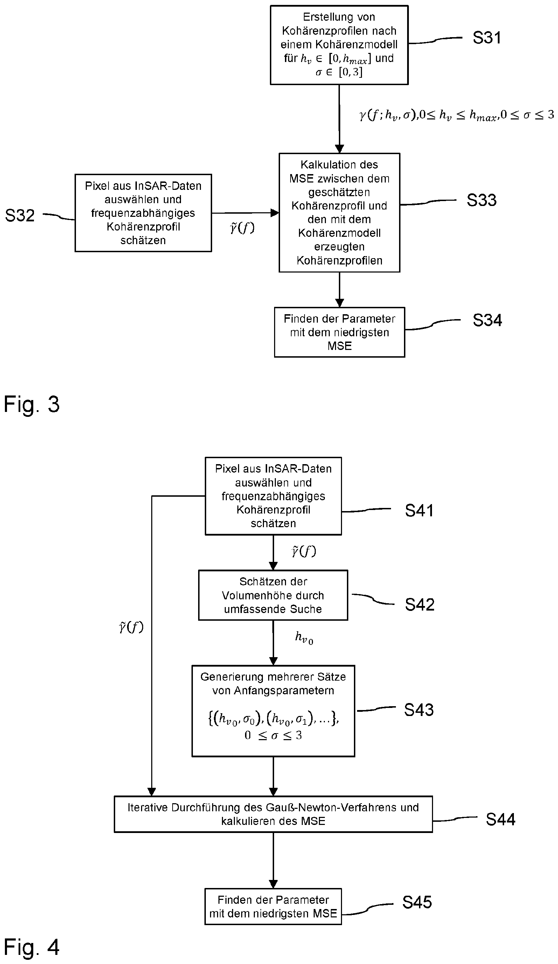

Unter Bezugnahme auf die nachfolgenden Blockdiagramme in den Figuren 3 bis 6 werden verschiedene Beispiele für die Realisierung der oben beschriebenen Parametersuche der die vertikale Struktur charakterisierenden Parameter beschrieben.

Fig. 3 zeigt in einem ersten Beispiel ein Blockdiagramm des Inversionsverfahrens, das im Falle von in zwei SAR-Aufnahmen ermittelten SAR-Daten mit einer Basislinie zur Anwendung kommt. Das hierin beschriebene Schema der Parametersuche kommt dann zur Anwendung, wenn von einer konstanten Extinktion über die Frequenz ausgegangen werden kann.

Die Schätzung für die zwei Parameter $h_v$ und $\sigma$ kann beispielsweise durch die Berechnung des Fehlers für alle möglichen gültigen Parametersätze durchgeführt werden. Das gültige Intervall für $h_v$ ist $0 \leq h_v \leq h_{max}$, wobei $h_{max}$ zur Berechnung der Basislinie in der weiter unten aufgeführten Gleichung (6) verwendet wird. Eine Übersicht über die Werte für den Extinktionskoeffizienten $\sigma$ ist in der Referenz [2] dargestellt. Gemäß der dort gezeigten Übersicht ist ein gültiges Intervall für $\sigma$ unter Berücksichtigung eines gewissen Spielraums $0 \leq \sigma \leq 3$ mit der Einheit [dB/m] gegeben. Ein Blockdiagramm der erschöpfenden Suchmethode ist in Fig. 3 gezeigt.

In Schritt S31 werden Kohärenzprofile $\gamma(f; h_v, \sigma)$ gemäß dem Kohärenzmodell in (2) für Werte der Parameter $h_v$ und $\sigma$ in den Intervallen $0 \leq h_v \leq h_{max}$ und $0 \leq \sigma \leq 3$ mit hinreichend kleinen Schritten erzeugt. In Schritt S32 erfolgt die Auswahl eines Pixels aus den InSAR-Daten, der einer Inversion zu unterziehen ist. Hieraus ergibt sich das geschätzte Kohärenzprofil $\tilde{\gamma}(f)$. In Schritt S33 wird der mittlere quadratische Fehler (mean squared error, MSE) zwischen dem geschätzten Kohärenzprofil und den mit dem Kohärenzmodell erzeugten Kohärenzprofilen für alle Werte von $h_v$ und $\sigma$ berechnet. In Schritt S34 werden die Parameter $h_v$ und $\sigma$ mit dem geringsten MSE gewählt und gespeichert. Das Verfahren wird iterativ über alle Pixel der InSAR-Daten durchgeführt.

Alternativ können Parameterschätzungsmethoden, die auf dem Gauß-Newton-Verfahren basieren, verwendet werden. Ein Vorteil der Verwendung von Gauß-Newton-Verfahren besteht darin, dass der Rechenaufwand für eine Suche nach den die vertikale Struktur charakterisierenden Parametern $h_v$ und $\sigma$ verringert werden kann. Für die iterative Suche nach den optimalen Parametern erfordern die Gauß-Newton-Verfahren jedoch die Wahl der Anfangsparameter für $h_v$ und $\sigma$. Der Anfangsparameter für $h_v$ wird im Intervall $0 \leq h_v \leq h_{max}$ als derjenige gewählt, für den der MSE zwischen dem nach dem Kohärenzmodell von (2) berechneten Kohärenzprofil unter der Annahme, dass es keine Extinktion gibt ($\sigma = 0$), und dem geschätzten Kohärenzprofil am geringsten ist. Anhand des Anfangswerts der Volumenhöhe werden mehrere Sätze der Anfangsparameter $h_v$ und $\sigma$ für das Gauß-Newton-Verfahren festgelegt, wobei für jeden Satz der Anfangsparameter $h_v$ gleich dem im vorhergehenden Schritt geschätzten ist, während der Anfangsparameter der Extinktion $\sigma$ über das Intervall $0 \leq \sigma \leq 3$ mit hinreichend kleinen Schritten variiert. Das Gauß-Newton-Verfahren wird iterativ für mehrere Sätze von Anfangsparametern mit einer gemeinsamen Höhe $h_v$ und unterschiedlichen Extinktionskoeffizienten $\sigma$ durchgeführt. Nach Beendigung jedes Durchlaufs des Gauß-Newton-Verfahrens werden der mittlere Fehler und die aktualisierten Parameter aufgezeichnet. Die aktualisierten, die vertikale Struktur charakterisierenden Parameter $h_v$ und $\sigma$ mit dem geringsten mittleren quadratischen Fehler stellen das Ergebnis der Schätzung dar. Das Vorgehen ist im Blockdiagramm in Fig. 4 dargestellt.

In Schritt S41 wird ein von den InSAR-Daten einer Inversion zu unterziehendes Pixel ausgewählt. Das sich hieraus ergebende geschätzte Kohärenzprofil $\tilde{\gamma}(f)$ wird in Schritt S42 einer Schätzung der Höhe (d.h. des ersten die vertikale Struktur charakterisierenden Parameters) durch umfassende Suche zugeführt. Das Ergebnis $h_{v0}$ wird in Schritt S43 dazu verwendet, initiale Werte für die umfassende Suche zu generieren. In Schritt S44 wird iterativ das Gauß-Newton-Verfahren durchgeführt und der geringste mittlere quadratische Fehler, MSE, ermittelt. In Schritt S45 werde diejenigen, die vertikale Struktur charakterisierenden Parameter $h_v$ und $\sigma$ mit dem geringsten MSE ausgewählt.

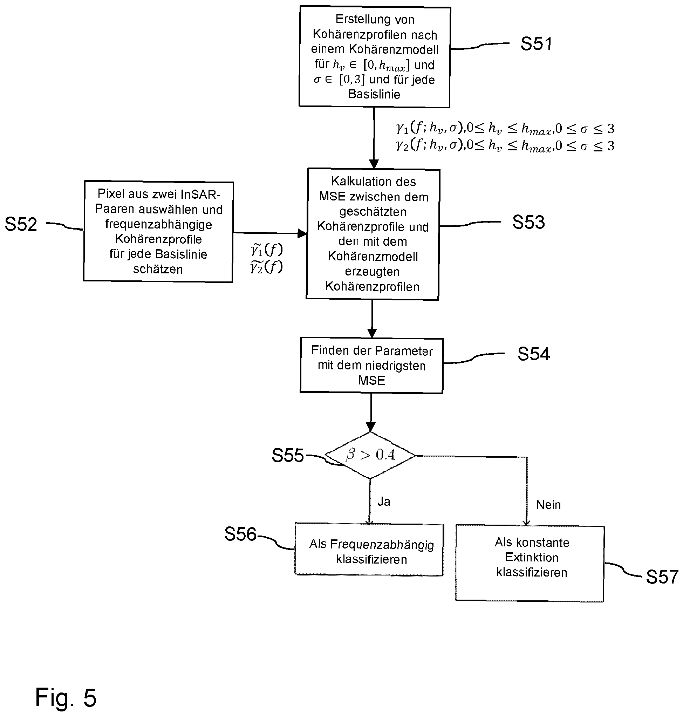

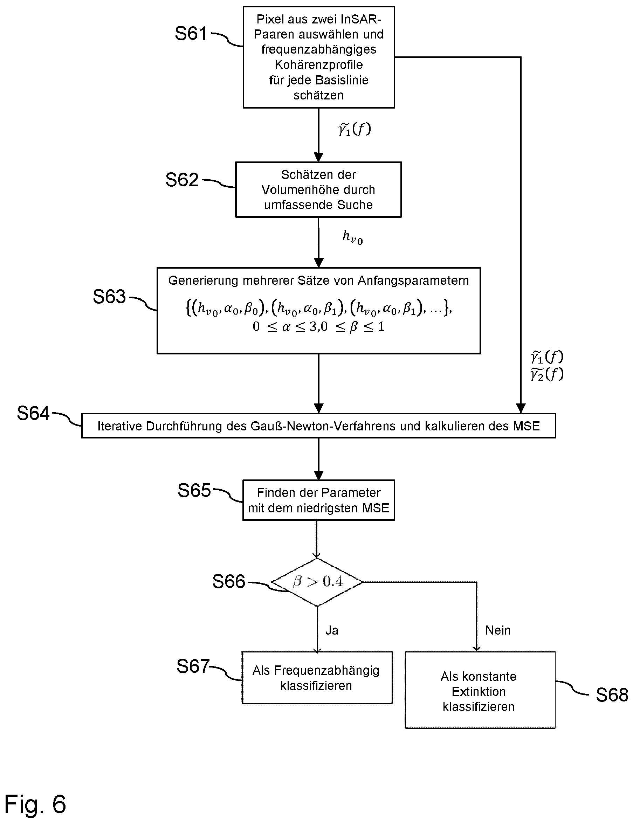

Die Blockdiagramme in den Figuren 5 und 6 beschreiben die Situation, bei der mindestens drei SAR-Aufnahmen über das zu untersuchende Gebiet mit der vertikalen Struktur stattgefunden haben, so dass zumindest zwei bekannte Basislinien zueinander existieren.

Das Blockdiagramm gemäß Fig. 5 betrachtet dabei der Fall der frequenzabhängigen Extinktion. Die Schätzung für drei die Parameter $h_v$ sowie $\alpha, \beta$ kann durch Berechnung des Fehlers für alle möglichen gültigen Parametersätze durchgeführt werden. Das gültige Intervall für die Höhe $h_v$ ist $0 \leq h_v \leq h_{max}$, wobei $h_{max}$ zur Berechnung der größeren Basislinie gemäß der weiter unten stehenden Gleichung (6) verwendet wird. Experimentelle Werte für die den Extinktionskoeffizienten $\sigma$ repräsentierenden Parameter $\alpha, \beta$ sind in der Referenz [1] angegeben. Das gültige Intervall für $\alpha, \beta$ unter Berücksichtigung von Margen wird zu $0 \leq \alpha \leq 3$ und $0 \leq \beta \leq 1$ gewählt. Für den Parameter $\beta$, der kleiner als 0.4 ist, ist die Frequenzabhängigkeit des Extinktionskoeffizienten $\sigma$ vernachlässigbar. Wenn das Ergebnis der Schätzung für $\beta$ somit kleiner als 0.4 ist, wird der Bereich daher als Bereich mit kontantem Extinktionskoeffizienten $\sigma$ betrachtet,

dessen Wert bei der Frequenz $f = \dfrac{f_{max} + f_{min}}{2}$ unter Verwendung der Gleichung (3) bewertet wird. Ein Blockdiagramm des soeben beschriebenen Verfahrens der umfassenden Suche ist in Fig. 5 dargestellt.

In Schritt S51 werden Kohärenzprofile $\gamma_1(f; h_v, \sigma)$ und $\gamma_2(f; h_v, \sigma)$ gemäß dem Kohärenzmodell in (2) für zwei unterschiedlichen Basislinien (bezeichnet mit den Tiefbuchstaben 1 und 2) und für Werte der Parameter $h_v$ und $\sigma$ in den Intervallen $0 \leq h_v \leq h_{max}$ und $0 \leq \sigma \leq 3$ mit hinreichend kleinen Schritten erzeugt. In Schritt S52 erfolgt die Auswahl eines Pixels aus den InSAR-Daten, der einer Inversion zu unterziehen ist. Hieraus ergeben sich die geschätzte Kohärenzprofile $\widetilde{\gamma_1}(f)$ und $\widetilde{\gamma_2}(f)$ für die zwei Basislinien der zwei verfügbaren InSAR-Paare. In Schritt S53 wird der MSE zwischen den geschätzten Kohärenzprofilen und den mit dem Kohärenzmodell erzeugten Kohärenzprofilen für alle Werte von $h_v$ und $\sigma$ berechnet, wobei die Kohärenzprofile für beide Basislinien für die Berechnung des MSE berücksichtigt werden. In Schritt S54 erfolgt das Finden der Parameter mit der geringsten MSE. In Schritt S55 erfolgt die Feststellung, ob $\beta > 0.4$ ist. Ist dies der Fall (Pfad "Ja"), erfolgt in Schritt S56 eine Klassifikation als frequenzabhängig. Ist dies nicht der Fall (Pfad "Nein"), erfolgt in Schritt S56 eine Klassifikation als konstante Extinktion $\sigma$, dessen Wert bei der Frequenz

$f = \dfrac{f_{max} + f_{min}}{2}$ unter Verwendung der Gleichung (3) bewertet wird..

In dem in Fig. 6 gezeigten Ausführungsbeispiel wird ein Volumenhöhenwert mit dem geringsten Fehler anhand der gemessenen Kohärenzprofile aus dem InSAR-Paar mit der größten Basislinie ermittelt. Das Kohärenzmodell, das keine Extinktion annimmt, wird für die Suche nach einem Höhenwert mit dem geringsten Fehler verwendet. Mit einem anfänglichen Volumenhöhenwert wird ein Satz von Anfangsparametern für das Gauß-Newton-Verfahren definiert. Das Gauß-Newton-Verfahren wird wiederum iterativ für mehrere Sätze von Anfangsparametern mit einer gemeinsamen Volumenhöhe und verschiedenen Kombination von $\alpha$ und $\beta$ durchgeführt. Nach Beendigung jeder Iteration des Gauß-Newton-Verfahrens werden der mittlere quadratische Fehler und die aktualisierten Parameter, die die vertikale Struktur charakterisieren, gespeichert. Die aktualisierten Parameter mit dem geringsten Fehler sind das Ergebnis der Schätzung. Ähnlich wie bei der erschöpfenden Suche wird das Gebiet als Gebiet mit konstantem Extinktionskoeffizienten $\sigma$ betrachtet, wenn das Schätzungsergebnis für $\beta < 0.4$ ist. Ein Blockdiagramm dieses Verfahrens ist in Fig. 6 dargestellt.

In Schritt S61 wird ein Pixel von zwei InSAR-Paaren gewählt, welcher einer Inversion zu unterziehen ist. Das sich hieraus ergebende geschätzte Kohärenzprofil aus dem InSAR-Paar mit der größten Basislinie $\widetilde{\gamma_1}(f)$ wird in Schritt S62 einer erschöpfenden Suche zur Schätzung der Volumenhöhe $h_0$ unterzogen. Das Ergebnis $h_{v_0}$ wird in Schritt S63 dazu verwendet, initiale Werte für die umfassende Suche zu generieren. Ein zweites Kohärenzprofil aus dem InSAR-Paar mit der kleineren Basislinie $\widetilde{\gamma_2}(f)$, wird zusammen mit $\widetilde{\gamma_1}(f)$ in Schritt S64 dem iterativen Gauß-Newton-Verfahren unterzogen, um den MSE zu bestimmen. In Schritt S65 werden die Parameter, die die vertikale Struktur charakterisieren und den kleinsten MSE aufweisen, ausgewählt. Ein die vertikale Struktur charakterisierender Parameter $\beta$ wird in Schritt S66 mit einer Schwelle 0.4 verglichen. Ist der Schätzwert $\beta > 0{,}4$ (Pfad "Ja"), so wird das Gebiet in Schritt S67 als frequenzabhängig betrachtet, d.h. als Gebiet mit konstantem Extinktionskoeffizienten. Ist der Vergleich in Schritt S66 negativ (Pfad "Nein"), so wird in Schritt S68 eine Klassifikation mit konstanten Extinktionskoeffizienten für das betrachtete Gebiet angenommen.

Im Folgenden wird die Auswahl der Basislinie beschrieben. Bei der Inversion können die aus den Daten mit der größten Basislinie geschätzten Kohärenzprofile zur Schätzung der Volumenhöhe verwendet werden. Für eine sinnvolle Höhenschätzung wird die größere Basislinie so gewählt, dass das erste Minimum des Kohärenzprofils innerhalb des Frequenzintervalls liegt, für das das Kohärenzprofil bereit gestellt wird. Die größere Basislinie $B_1$ sollte deshalb wie folgt bestimmt werden:

$$\frac{cR_s \sin\theta}{2ph_{max}f_{max}} < B_1 < \frac{cR_s \sin\theta}{2ph_{max}f_{min}} \qquad (6)$$

wobei $R_s$ die Schrägentfernung ist, $h_{max}$ die maximale vertikale Höhe ist, die im interessierenden Bereich erwartet wird, und $f_{min}$ und $f_{max}$ die minimale bzw. maximale Frequenz des übertragenen Signals sind. Der Faktor $p$ ist ein ganzzahliger Wert, der je nach Erfassungsmodus variiert. Der Wert von p ist 1 für das Repeat-Pass-Verfahren (monostatische Konfiguration) und 2 für das Single-Pass-Verfahren (bi-statische oder multi-statische Konfiguration).

Für eine monostatische Konfiguration mit einer Plattformhöhe $h_{UAV}$ von 100 m, einem Einfallswinkel $\theta$ von 60°, einer maximalen Volumenhöhe $h_{max}$ von 8 m und einer Sendefrequenz von $f_{min} = 1$ GHz bis $f_{max} = 4$ GHz betragen die minimalen und maximalen Werte der größeren Basislinien 0,81 m bzw. 3,24 m. Bei einer bi-statischen Konfiguration liegen die Minimal- und Maximalwerte der größeren Basislinien bei 0,405 m bzw. 1,62 m.

Die geschätzte Kohärenzprofile, die aus dem InSAR-Paar mit der kleineren Basislinie ermittelt wurde, wird zur Schätzung der beiden Parameter $\alpha$ und $\beta$ des frequenzabhängigen Extinktionskoeffizienten $\sigma(f)$ des Höhenprofils ver-wendet.

Aus diesem Grund ist es zweckmäßig, wenn die Kohärenzprofile der beiden Basislinien einen gemeinsamen Bereich einnehmen, wenn sie auf die vertikale Wellenzahl abgebildet werden, d.h. wenn sie durch die jeweiligen Basislinien skaliert werden. Eine Richtlinie für die Wahl der kleineren Basislinie $B_2$ könnte sein, dass sich das mit der kleineren Basislinie ermittelte Kohärenzprofil bei der Abbildung auf die vertikale Wellenzahl zu 50% mit dem mit der größeren Basislinie $B_1$ ermittelten Kohärenzprofil überschneidet, d.h. wenn

$$B_2 = \frac{f_{max}+f_{min}}{2\,f_{max}} B_1 \qquad (7)$$

gilt. Geht man von einer Sendefrequenz von $f_{min} = 1$ GHz bis $f_{max} = 4$ GHz und der größeren Basislinie $B_1 = 3$ m aus, so beträgt die zweite Basislinie $B_2 = 1{,}87$ m.

Bei der Erfassung in einem Durchgang müssen alle Plattformen einen sicheren Abstand zueinander einhalten, um Kollisionen zu vermeiden. Die Nähe zwischen den Plattformen kann aufrechterhalten werden, ohne die Bedingungen auf der normalen Basislinie in den Gleichungen (1) und (2) zu beeinträchtigen, indem eine Komponente der Basislinie parallel zur Reichweite des Radars zum Ziel eingeführt wird. Wenn weitere Plattformen, z.B. Drohnen, zur Verfügung stehen, sollte eine noch kürzere Basislinie angestrebt werden, z.B. $B_3 = \frac{f_{max}+f_{min}}{2\,f_{max}} B_2$.

Das vorliegende Verfahren kann beispielsweise mit kostengünstigen unbemannten Luftfahrzeugen (UAV), z.B. Drohnen, durchgeführt werden. Das Verfahren kann jedoch ohne Einschränkung auch mit SAR-Systemen, die luft- oder satellitengestützte Trägerplattformen nutzen, realisiert werden.

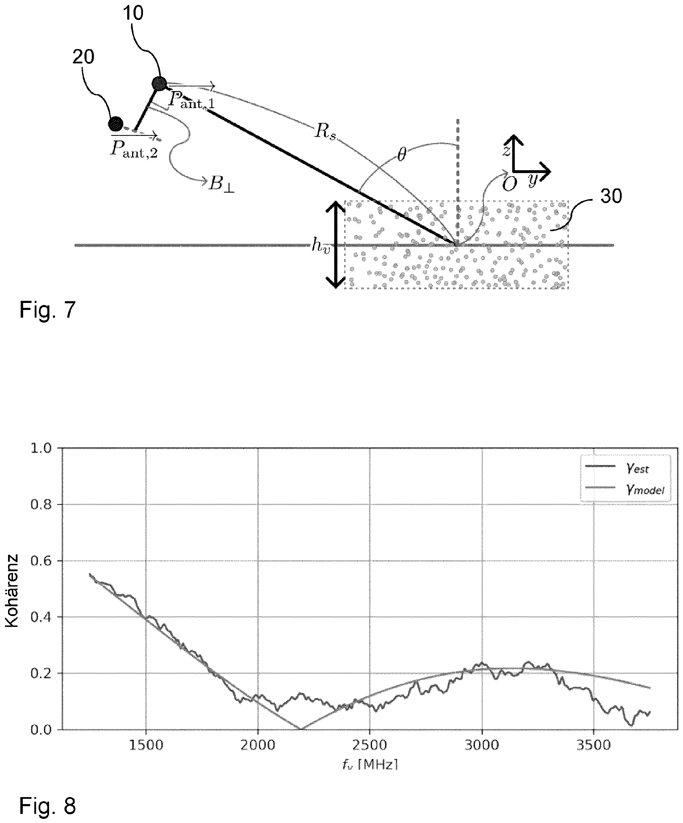

In den Figuren 7 bis 10 wird ein Beispiel für die Umsetzung des beschriebenen Verfahrens anhand der Erzeugung eines Satzes von simulierten SAR-Daten und ihrer volumetrischen Inversion vorgestellt. Es wird der Fall betrachtet, dass keine frequenzabhängige Extinktion vorliegt und lediglich zwei SAR-Bilder aufgenommen worden, womit eine Basislinie vorliegt.

Die Geometrie der Simulation ist in Fig. 7 dargestellt, wobei mit 30 halbtransparente Medien, die als Punktziele modelliert sind, dargestellt sind. Die vertikale Struktur des halbtransparenten Mediums 30 verteilt sich über eine Höhe $h_v$ um den Ursprung O. Unter der Annahme, dass M Punktstreuer innerhalb des interessierenden Bereichs verteilt sind, werden die Entfernungskomprimierten Signale im Frequenzbereich wie folgt modelliert:

$$s_1(f_r) = \sum_{m=1}^{M} A_m \, exp\left[j\frac{4\pi}{c} f_r R_{m,1}\right]$$

$$s_2(f_r) = \sum_{m=1}^{M} A_m \, exp\left[j\frac{4\pi}{c} f_r R_{m,2}\right] \qquad (8)$$

In diesen Gleichungen sind $m$ der Index der einzelnen Punktstreuer und $A_m$ die komplexe Amplitude der Punktstreuer. Die Entfernungsfrequenz wurde als gleichmäßig abgetastete Variable von 1 GHz bis 4 GHz definiert. $R_{m,1}$ und $R_{m,2}$ sind die von jedem Ziel gemessenen Entfernungen zur Antenne der Plattformen 10, 20. Die Entfernungen können mit $R_{m,1} = |\overrightarrow{P_{ant,1}} - \overrightarrow{P_{tgt,m}}|$ und $R_{m,2} = |\overrightarrow{P_{ant,2}} - \overrightarrow{P_{tgt,m}}|$ gemessen werden, wobei $\overrightarrow{P_{ant,1}}$ und $\overrightarrow{P_{ant,2}}$ die Position der Antennen der Plattformen 10, 20 bezeichnen und $\overrightarrow{P_{tgt,m}}$ die Position des m-ten Punktstreuers ist.

Bei einem, z.B. auf einer Drohne montierten, Radar wurden die Höhe und der Neigungsbereich von $\overrightarrow{P_{ant,1}}$ 100 m bzw. $\overrightarrow{P_{ant,2}}$ mit 200 m angenommen. Dementsprechend war der Einfallswinkel im Zentrum der Szene 60°. Die Position $\overrightarrow{P_{ant,2}}$ wurde so definiert, dass sie 3 m von $\overrightarrow{P_{ant,1}}$ entfernt ist, und zwar in der Richtung senkrecht zur Blickrichtung in Bezug auf das Zentrum der Szene.

In diesem einfachen Szenario wurde von einer gleichmäßigen vertikalen Streuung ausgegangen. Daher wurde $A_m$ als konstant angenommen und das halbtransparente Medium wurde mit Zufallsvariablen modelliert. Die vertikalen Positionen der Punktstreuer wurden daher als Realisierungen einer gleichförmigen Zufallsvariablen erhalten, deren Grenze sich auf die gegebene Volumenhöhe bezieht.

Die Kohärenzabschätzung und das Modell für eine Volumenhöhe von 4,0 m sind in Fig. 8 dargestellt, wobei die Kohärenzabschätzung mit $\gamma_{est}$ und das Modell mit $\gamma_{model}$ bezeichnet sind. Die Breite des Frequenzfensters $f_W$ und die für die Schätzung verwendete Reichweite betrugen 500 MHz bzw. 3,5 m. Es wurde davon ausgegangen, dass für die Schätzung der Kohärenzprofile eines bestimmten Pixels die Kohärenzprofile etwa 100 benachbarten Pixeln verwendet werden. Die geschätzte Kohärenz kann trotz der durch stochastische Prozesse bedingten Abweichung zur Messung der Volumenhöhe verwendet werden. Durch Berechnung der mittleren quadratischen Differenz zwischen der Kohärenzschätzung mit Modellen mit unterschiedlichen Höhen für ein untersuchtes Pixel wird eine Volumenhöhe auf 3,9 m geschätzt.

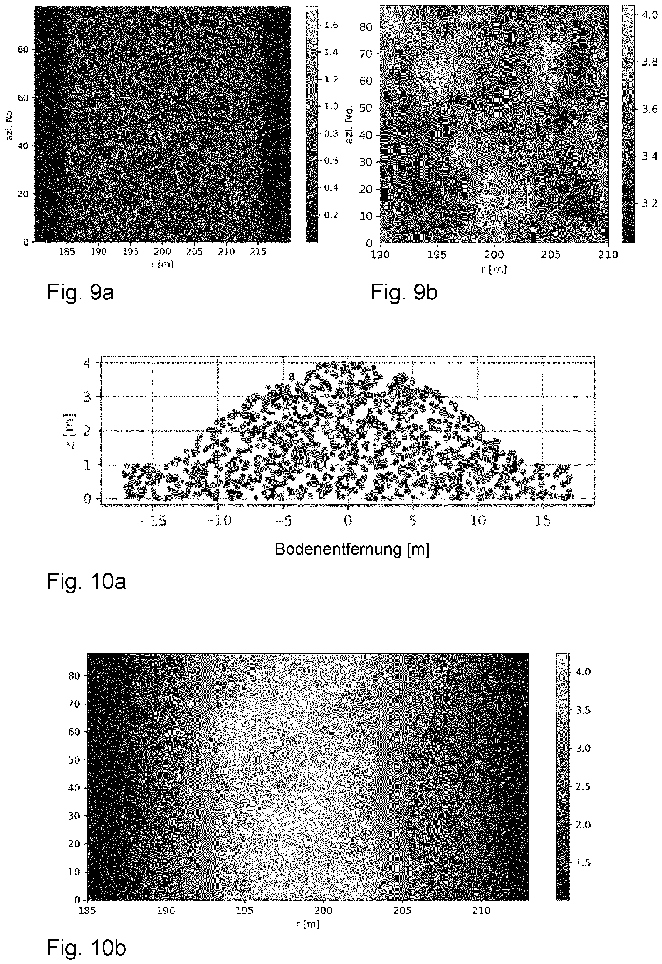

Der Schätzungsprozess kann über die beiden Dimensionen der Szene wiederholt werden, um eine Volumenhöhenkarte zu erstellen. Fig. 9a zeigt ein Beispiel für ein SAR-Bild mit 100 Azimut-Bins und 30 m Entfernungsbereich. Es wurde angenommen, dass die Höhe des Volumens 3,5 m beträgt. In Fig. 9b ist das Ergebnis der Höhenschätzung, das für die gesamte Szene iterativ ermittelt wurde, als farbcodierte Karte dargestellt, wobei helle Werte eine größere Höhe und dunklere Werte eine kleinere Höhe repräsentieren. Die durchschnittliche geschätzte Höhe beträgt 3,546 m, während die Standardabweichung 0,158 m beträgt.

Fig. 10a zeigt ein Beispiel mit variierender Volumenhöhe über einer betrachteten Szene. Die simulierten Daten wurden unter Verwendung einer Szene erzeugt, deren Volumenhöhe sich langsam mit der Bodenentfernung ändert. Die maximale und minimale Höhe betragen 1 m bzw. 4 m. Das Ergebnis der Höhenschätzung ist in Fig. 10b als farbcodierte Karte dargestellt, wobei wiederum helle Werte eine Höhe von etwa 4 m und dunkle Werte eine Höhe von etwa 1,5 m repräsentieren. Die maximale und die minimale Höhe betragen 1 m bzw. 4 m. Das Ergebnis der Schätzung stimmt mit dem simulierten Ziel überein, wobei die minimale Höhe des Volumens an beiden Enden des Entfernungsstreifens 1,01 m und die maximale Höhe des Volumens in der Mitte des Streifens 4,24 m beträgt. Die Erfindung lässt sich auch auf Fälle mit mehreren Plattformen und komplexeren vertikalen Streuprofilen anwenden.

Referenzen

[1] L. A. Bessette and S. Ayasli, "Ultra-wideband P-3 and CARABAS II foliage attenuation and backscatter analysis," Proceedings of the 2001 IEEE Radar Conference (Cat. No.01CH37200), Atlanta, GA, USA, 2001, Seiten 357-362, doi: 10.1109/NRC.2001.923005.

[2] J. David Ballester-Berman, "Reviewing the role of the extinction coefficient in radar remote sensing", arXiv:2012.02609, 2020.

**Patentansprüche**

1. Verfahren zum Bestimmen einer vertikalen Struktur eines halbtransparenten Mediums aus SAR-Daten eines SAR-Systems, das entweder ein oder mehrere Breitband-Radare mit einer im Vergleich zur Trägerfrequenz hohen Bandbreite von mehr als 25% oder alternativ ein oder mehrere Multiband-Radare mit verschiedenen Frequenzbändern, bei denen die obere Frequenz des Multiband-Radars mindestens doppelt so groß wie die untere Frequenz des Multiband-Radars ist, umfasst, bei dem:

a) durch das SAR-System SAR-Daten von zumindest zwei SAR-Aufnahmen eines Gebiets, dessen vertikale Struktur bestimmt werden soll, empfangen werden, wobei die zumindest zwei SAR-Aufnahmen aus unterschiedlichen Beobachtungswinkeln mit bekannten Basislinien zueinander durchgeführt werden;
b) für jede der zumindest zwei SAR-Aufnahmen ein jeweiliges Breitband-SAR-Bild (10B, 20B) erzeugt wird;
c) aus einem oder mehreren unterschiedlichen Paaren an Breitband-SAR-Bildern (10B, 20B) über den gesamten Bereich der Breitbandfrequenz jeweils eine Vielzahl von Schmalband-Interferogrammen mit unterschiedlichen Mittenfrequenzen bestimmt wird, wobei Schmalband-Interferogramme entsprechender Mittenfrequenzen des oder jedes der mehreren unterschiedlichen Paare an Breitband-SAR-Bildern (10B, 20B) einen Satz an Schmalband-Interferogrammen bilden;
d) aus jedem Satz an Schmalband-Interferogrammen für unterschiedliche Bildbereiche jeweils ein entsprechendes Profil der frequenzabhängigen Kohärenz bestimmt wird;
e) eine Inversion für jedes Kohärenzprofil bestimmt wird; und
f) aus der Inversion die vertikale Struktur charakterisierende Parameter bestimmt werden.

2. Verfahren nach Anspruch 1, **dadurch gekennzeichnet, dass** die Kohärenzprofile pixelweise bestimmt werden.

3. Verfahren nach Anspruch 1 oder 2, **dadurch gekennzeichnet, dass** die Mittenfrequenzen zweier benachbarter oder aufeinander folgender Schmalband-Interferogramme so gewählt sind, dass die zwei Schmalband-Interferogramme teilweise überlappen.

4. Verfahren nach Anspruch 3, **dadurch gekennzeichnet, dass** der Überlapp zwischen den zwei Schmalband-Interferogrammen 50% oder mehr beträgt.

5. Verfahren nach einem der vorhergehenden Ansprüche, **dadurch gekennzeichnet, dass** die Schmalband-Interferogramme aus Schmalbandbildern mit einer geringfügig unterschiedlichen Schmalbandbreite erzeugt werden.

6. Verfahren nach einem der vorhergehenden Ansprüche, **dadurch gekennzeichnet, dass** sich die Mittenfrequenzen der beiden Schmalbandbilder, die zur Bildung eines jeweiligen Schmalbandinterferogramms verwendet werden, insbesondere geringfügig, unterscheiden.

7. Verfahren nach einem der vorhergehenden Ansprüche, **dadurch gekennzeichnet, dass** in Schritt a) durch das SAR-System SAR-Daten von drei SAR-Aufnahmen des Gebiets empfangen werden, wobei die drei SAR-Aufnahmen mit zwei bekannten Basislinien zueinander durchgeführt werden.

8. Verfahren nach Anspruch 7, **dadurch gekennzeichnet, dass** in Schritt b) für jeden der drei SAR-Aufnahmen ein jeweiliges Breitband-SAR-Bild bestimmt wird und in Schritt c) aus den drei daraus bildbaren, unterschiedlichen Paaren an Breitband-SAR-Bildern über den gesamten Bereich der Breitbandfrequenz jeweils eine Vielzahl von Schmalband-Interferogrammen mit unterschiedlichen Mittenfrequenzen bestimmt wird, wobei Schmalband-Interferogramme entsprechender Mittenfrequenzen jedes der drei Paare an Breitband-SAR-Bildern einen Satz an Schmalband-Interferogrammen bilden.

9.  Verfahren nach Anspruch 7 oder 8, **dadurch gekennzeichnet, dass** in Schritt d) aus jedem der drei Sätze an Schmalband-Interferogrammen frequenzabhängige Kohärenzprofile bestimmt werden.

10. Verfahren nach einem der vorhergehenden Ansprüche, **dadurch gekennzeichnet, dass** in Schritt f) die die vertikale Struktur charakterisierenden Parameter durch ein Gauß-Newton-Verfahren oder die Bestimmung des mittleren quadratischen Fehlers (MSE) bestimmt werden.

11. Verfahren nach einem der vorhergehenden Ansprüche, **dadurch gekennzeichnet, dass** als die vertikale Struktur charakterisierende Parameter zumindest

    - eine Höhe ($h_v$) der vertikalen Struktur und
    - ein Extinktionskoeffizient ($\sigma$), der die Dämpfung des elektromagnetischen Signals durch das Medium der vertikalen Struktur angibt, oder den Extinktionskoeffizienten ($\sigma$) charakterisierende Parameter ($\alpha, \beta$) bestimmt werden.

12. Verfahren nach Anspruch 11, **dadurch gekennzeichnet, dass**, abhängig vom Ergebnis der Schätzung eines den Extinktionskoeffizienten ($\sigma$) charakterisierenden Parameters ($\beta$), der Extinktionskoeffizient ($\sigma$) als frequenzabhängig oder konstant angenommen wird.

13. Verfahren nach einem der Ansprüche 1 bis 12, **dadurch gekennzeichnet, dass** die Bestimmung der SAR-Daten durch eine Plattform im Repeat-Pass-Verfahren erfolgt.

14. Verfahren nach einem der Ansprüche 1 bis 12, **dadurch gekennzeichnet, dass** die Bestimmung der SAR-Daten durch zwei oder mehr Plattformen im Single-Pass-Verfahren erfolgt, wobei die zwei oder mehr Plattformen in bistatischer oder multi-statischer Konfiguration konfiguriert sind.

15. Computerprogrammprodukt, umfassend Befehle, die bei der Ausführung des Programms durch einen Computer diesen veranlassen, das Verfahren nach einem der Ansprüche 1 bis 14 auszuführen.

16. Vorrichtung zum Bestimmen einer vertikalen Struktur eines halbtransparenten Mediums aus SAR-Daten eines SAR-Systems, das entweder ein oder mehrere Breitband-Radare mit einer im Vergleich zur Trägerfrequenz hohen Bandbreite von mehr als 25% oder alternativ ein oder mehrere Multiband-Radare mit verschiedenen Frequenzbändern, bei denen die obere Frequenz des Multiband-Radars mindestens doppelt so groß wie die untere Frequenz des Multiband-Radars ist, umfasst, wobei die Vorrichtung einen Prozessor aufweist, der dazu eingerichtet ist, das Verfahren gemäß einem der Ansprüche 1 bis 14 durchzuführen.

Fig. 1

Fig. 2

```
┌─────────────────────┐
│   Erstellung von     │
│   Kohärenzprofilen   │
│   nach einem         │──── S31
│   Kohärenzmodell     │
│   für hᵥ ∈ [0,h_max] │
│   und σ ∈ [0,3]      │
└─────────────────────┘
```

$\gamma(f; h_v, \sigma), 0 \leq h_v \leq h_{max}, 0 \leq \sigma \leq 3$

```
┌──────────────────┐        ┌──────────────────┐
│ Pixel aus InSAR-  │       │ Kalkulation des   │
│ Daten auswählen   │  γ̃(f) │ MSE zwischen dem  │
│ und frequenz-     │──────▶│ geschätzten Kohär-│──── S33
│ abhängiges Kohär- │       │ enzprofil und den │
│ enzprofil schätzen│       │ mit dem Kohärenz- │
└──────────────────┘        │ modell erzeugten  │
   S32                      │ Kohärenzprofilen  │
                            └──────────────────┘
                                    │
                            ┌──────────────────┐
                            │ Finden der        │
                            │ Parameter mit dem │──── S34
                            │ niedrigsten MSE   │
                            └──────────────────┘
```

## Fig. 3

```
┌──────────────────┐
│ Pixel aus InSAR-  │
│ Daten auswählen   │──── S41
│ und frequenz-     │
│ abhängiges Kohär- │
│ enzprofil schätzen│
└──────────────────┘
        │ γ̃(f)
┌──────────────────┐
│ Schätzen der      │
│ Volumenhöhe durch │──── S42
│ umfassende Suche  │
└──────────────────┘
        │ h_{v₀}
┌──────────────────┐
│ Generierung       │
│ mehrerer Sätze    │
│ von Anfangs-      │──── S43
│ parametern        │
│ {(h_{v₀},σ₀),...} │
│ 0 ≤ σ ≤ 3         │
└──────────────────┘
┌─────────────────────────────────┐
│ Iterative Durchführung des Gauß- │──── S44
│ Newton-Verfahrens und kalkulieren│
│ des MSE                          │
└─────────────────────────────────┘
┌──────────────────┐
│ Finden der        │──── S45
│ Parameter mit dem │
│ niedrigsten MSE   │
└──────────────────┘
```

γ̃(f)

## Fig. 4

14

Erstellung von
Kohärenzprofilen nach
einem Kohärenzmodell
für $h_v \in [0, h_{max}]$ und
$\sigma \in [0,3]$ und für jede
Basislinie

S51

$\gamma_1(f; h_v, \sigma), 0 \leq h_v \leq h_{max}, 0 \leq \sigma \leq 3$
$\gamma_2(f; h_v, \sigma), 0 \leq h_v \leq h_{max}, 0 \leq \sigma \leq 3$

Pixel aus zwei InSAR-
Paaren auswählen und
frequenzabhängige
Kohärenzprofile
für jede Basislinie
schätzen

S52

$\widetilde{\gamma_1}(f)$
$\widetilde{\gamma_2}(f)$

Kalkulation des
MSE zwischen dem
geschätzten
Kohärenzprofile und
den mit dem
Kohärenzmodell
erzeugten
Kohärenzprofilen

S53

Finden der Parameter
mit dem niedrigsten
MSE

S54

S55 — $\beta > 0.4$

Ja                    Nein

S56 — Als Frequenzabhängig
klassifizieren

Als konstante
Extinktion
klassifizieren

S57

Fig. 5

Fig. 6

Fig. 7

Fig. 8

Fig. 9a

Fig. 9b

Fig. 10a

Fig. 10b

| | Europäisches Patentamt / European Patent Office / Office européen des brevets | **EUROPÄISCHER RECHERCHENBERICHT** | **Nummer der Anmeldung**<br>EP 24 17 5645 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TREUHAFT ROBERT N. ET AL: "Vegetation characteristics and underlying topography from interferometric radar", RADIO SCIENCE, Bd. 31, Nr. 6, 1. November 1996 (1996-11-01), Seiten 1449-1485, XP093212423, US ISSN: 0048-6604, DOI: 10.1029/96RS01763 * das ganze Dokument * ----- | 1-16 | INV. G01S13/90 G01S13/02 |
| A | PRAKOSO KEMAL UNGGUL: "Tropical Forest Mapping using Multiband Polarimetric and Interferometric SAR Data", PROCEEDINGS OF THE WORKSHOP POLINSAR - APPLICATIONS OF SAR POLARIMETRY AND POLARIMETRIC INTERFEROMETRY, 16. Januar 2003 (2003-01-16), XP093212393, Gefunden im Internet: URL:https://citeseerx.ist.psu.edu/document?repid=rep1&type=pdf&doi=77d68194951d4ffd99af6ff8994a2679646b5fcf> * das ganze Dokument * ----- | 1-16 | |
| A | CHOI CHANGHYUN ET AL: "An Investigation of Forest Height Estimation by using TanDEM-X Local InSAR Phase Center Variations", 13TH EUROPEAN CONFERENCE ON SYNTHETIC APERTURE RADAR, 1. April 2021 (2021-04-01), XP093212417, Gefunden im Internet: URL:https://ieeexplore.ieee.org/stampPDF/getPDF.jsp?tp=&arnumber=9472624&ref=aHR0cHM6Ly9pZWVleHBsb3JlLmllZWUub3JnL2Fic3RyYWN0L2RvY3VtZW50Lzk0NzI2MjQ=> * das ganze Dokument * ----- -/-- | 1-16 | RECHERCHIERTE SACHGEBIETE (IPC)<br>G01S |

Der vorliegende Recherchenbericht wurde für alle Patentansprüche erstellt

| Recherchenort | Abschlußdatum der Recherche | Prüfer |
|---|---|---|
| München | 8. Oktober 2024 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Seite 1 von 2

**EUROPÄISCHER RECHERCHENBERICHT**

Nummer der Anmeldung

EP 24 17 5645

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 103 728 604 B (CHINA AERO GEOPHYSICAL SURVEY & REMOTE SENSING CT FOR LAND & RESOURCES) 13. Januar 2016 (2016-01-13) * Zusammenfassung; Abbildung 5 * ----- | 1-16 | |
| A | JAAN PRAKS ET AL: "LIDAR-Aided SAR Interferometry Studies in Boreal Forest: Scattering Phase Center and Extinction Coefficient at X- and L-Band", IEEE TRANSACTIONS ON GEOSCIENCE AND REMOTE SENSING, IEEE, USA, Bd. 50, Nr. 10, 1. Oktober 2012 (2012-10-01), Seiten 3831-3843, XP011463618, ISSN: 0196-2892, DOI: 10.1109/TGRS.2012.2185803 * das ganze Dokument * ----- | 1-16 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 8. Oktober 2024 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 5645

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2024

| Im Recherchenbericht angeführtes Patentdokument | Datum der Veröffentlichung | Mitglied(er) der Patentfamilie | Datum der Veröffentlichung |
|---|---|---|---|
| CN 103728604 B | 13-01-2016 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **L. A. BESSETTE ; S. AYASLI.** Ultra-wideband P-3 and CARABAS II foliage attenuation and backscatter analysis. *Proceedings of the 2001 IEEE Radar Conference (Cat. No.01CH37200), Atlanta, GA, USA,* 2001, 357-362

- **J. DAVID BALLESTER-BERMAN.** Reviewing the role of the extinction coefficient in radar remote sensing. *arXiv:2012.02609,* 2020